# EUROPEAN PATENT APPLICATION

(11) **EP 1 953 732 A1**
(43) Date of publication of application: **06.08.2008**
(21) Application number: 06810265.6
(22) Date of filing: 19.09.2006
(51) Int. Cl.: G09G 5/00, H04N 5/64, H04N 5/76

(54) **REPRODUCTION APPARATUS, HEAD MOUNT DISPLAY DEVICE, AND PROGRAM FOR REALIZING THE REPRODUCTION APPARATUS**

(30) Priority: 29.09.2005 JP 2005284773; 01.08.2006 JP 2006209478
(71) Applicant: NIKON CORPORATION, Tokyo 100-8831 (JP)
(72) Inventor: KATO, Shigeru C/O NIKON CORPORATION, Chiyoda-ku, Tokyo 1008331 (JP); OTSUKI, Masaki C/O NIKON CORPORATION, Chiyoda-ku, Tokyo 1008331 (JP)
(74) Representative: Petzold, Silke
(86) International application number: PCT/JP2006/318523
(87) International publication number: WO 2007/037149

(57) **Abstract**

A reproduction apparatus for reproducing contents data, containing at least one of audio and image, includes a reproducing unit reproducing contents data, a connecting unit connecting an external device to the reproducing apparatus, and a controlling unit having control within the reproducing apparatus according to both the presence or absence of connection of the device to the connecting unit and a device type. Thus, it is possible to provide the reproduction apparatus, a head mount display device and a program, by which setting and manipulation, appropriate for the configuration of connected equipment (device) and the equipment (device) condition when connected, are realized automatically or greatly simplified.

## Description

### TECHNICAL FIELD

The present invention relates to a reproduction apparatus and a head mount display device for reproducing desired contents data through a detachable device such as a head mount display, and a program for realizing the reproduction apparatus.

### BACKGROUND ART

A portable media player employing up-to-date electronic technology is becoming widespread, because of the capability of realizing low power consumption, as well as low cost and compact size. The media player in recent years provides a compact memory medium capable of storing image information having a large amount of information, in combination with a compression coding technique. This enables reproduction of a variety of contents data.
Further, as a device connectable to the media player, not only a headphone and an earphone, a head mount display (hereinafter referred to as "HMD"), such as a near-eye display device, has been developed to flexibly cope with user needs. The HMD is a device detachable mounted on the head of a user, being capable of projecting a video image from the front of user's eye to the retina. By connecting the HMD to the media player, mounting the HMD on the head, and manipulating a manipulating part of the media player, the user can watch movies and contents including images, such as music clips.
Patent document 1: Japanese Unexamined Patent Application Publication No. H10-133840.

### DISCLOSURE OF THE INVENTION

### PROBLEMS TO BE SOL VED BY THE INVENTION

Meanwhile, it is necessary to perform the above manipulation according to the combination of the HMD and the contents. However, since the media player has a number of functions, and a number of various contents data are stored beforehand in the memory medium of the media player, the above-mentioned manipulation becomes complicated, and has not always been performed properly.
It is an object of the present invention to provide a reproducing apparatus, a head mount display device and a program, realizing setting and manipulation appropriate for the configuration of connected equipment (device) and the equipment (device) condition when connected, either automatically or in a greatly simplified manner.

### MEANS FOR SOLVING THE PROBLEMS

According to the present invention, a reproduction apparatus for reproducing contents data containing at least one of audio and image includes a reproducing unit reproducing the contents data, a connecting unit connecting an external device to the reproduction apparatus, and a controlling unit having control within the reproduction apparatus, according to presence or absence of the device connection to the connecting unit and a device type.
Further, preferably, there is provided an accepting unit accepting an instruction to the reproduction apparatus by the user, and the above controlling unit may restrict the user instruction which is acceptable by the accepting unit, according to the device type connected to the connecting unit.

Still further, preferably, the above accepting unit includes a displaying part displaying a menu with regard to acceptance of the user instruction, and the above controlling unit may modify the menu to be displayed on the displaying part of the accepting unit, according to the device type connected to the connecting unit.
Further, preferably, the above controlling unit may restrict a reproduction object by the reproducing unit to contents data capable of being output by the device connected to the connecting unit.

Further, preferably, an accepting unit accepting an instruction to the reproduction apparatus by the user is provided, and the above controlling unit may restrict executable operation of the reproduction apparatus based on the user instruction accepted by the accepting unit, according to the device type connected to the connecting unit.
Further, preferably, the above device connected to the connecting unit is a device having a displaying unit displaying images, while not having an audio-output unit outputting audio, and the above controlling unit may have control within the reproduction apparatus so that, among the user instructions accepted by the accepting unit, only the user instruction with regard to the contents data containing an image can be executed.

Further, preferably, the above device connected to the controlling unit is a device not having a displaying unit displaying images, while having an audio-output unit outputting audio, and the above controlling unit may have control within the reproduction apparatus so that, among the user instructions accepted by the accepting unit, only the user instruction with regard to the contents data containing audio can be executed.

Further, preferably, at least one of a displaying unit displaying an image and an audio-output unit outputting audio is provided, and the above controlling unit may restrict operation inside the reproduction apparatus including the displaying unit and the audio-output unit, according to the device connected to the connecting unit.
Further, preferably, the above controlling unit may interrupt power supply to at least one circuit unnecessary for outputting the contents data to the device, among circuits included in the reproduction apparatus, according to the contents data to be output to the device via the connecting unit.

Further, preferably, when a device having a displaying unit displaying images or an audio-output unit outputting audio is not connected to the connecting unit, the controlling unit may interrupt power supply to a circuit outputting arbitrary contents data to the device, among circuits included in the reproduction apparatus.
Further, preferably, a storing unit storing the contents data is provided, and with regard to a signal incapable of being output to the user from the device, the controlling unit may control so that an input signal similar to the above signal can be recorded into the storing unit, according to the device type connected to the connecting unit.

Further, preferably, a storing unit storing the contents data is provided, and when the device having a displaying unit displaying images is not connected to the connecting unit, the above controlling unit may control so that an input signal to the reproduction apparatus can be recorded into the storing unit.
Further, preferably, a storing unit storing the contents data is provided, and when the device having an audio-output unit outputting audio is not connected to the connecting unit, the above controlling unit may control so that an input signal to the reproduction apparatus can be recorded into the storing unit.

Further, preferably, a storing unit storing the contents data is provided, and the above device connected to the connecting unit is a device supplying arbitrary contents data to the reproduction apparatus, and the above controlling unit may control so that the contents data supplied from the device can be recorded into the storing unit.
Further, preferably, in addition to the above device, the above connecting unit connects a second device having a displaying unit displaying images or an audio-output unit outputting audio, and the controlling unit may control the reproducing unit so as not to output reproduction signals of arbitrary contents data to the second device via the connecting unit.

Further, preferably, in addition to the above device, the connecting unit connects a second device having a displaying unit displaying images or an audio-output unit outputting audio, and the controlling unit may interrupt power supply to a circuit outputting arbitrary contents data to the second device, among circuits included in the reproduction apparatus.
Further, preferably, in addition to the above device, the above connecting unit connects a second device having a displaying unit displaying images or an audio-output unit outputting audio, and the above controlling unit may control so that the user instruction accepted via the second device be not executed.

Further, preferably, the above controlling unit may compare the contents data stored in the storing unit with the contents data retained by the device, so as to control the contents data supplied from the device to be recordable into the storing unit, based on a comparison result.
Further, preferably, among the contents data not stored in the storing unit, the above controlling unit may control so that the contents data reproducible by the reproducing unit can be recorded into the storing unit.

Another reproduction apparatus according to the present invention, reproducing contents data containing at least one of audio and image, includes a reproducing unit reproducing the contents data, and a controlling unit having control within the reproduction apparatus, according to reproducibility of each contents data type.
Here, preferably, an accepting unit accepting an instruction to the reproduction apparatus by the user is provided, and the above controlling unit may restrict the user instruction acceptable by the accepting unit, according to the reproducibility.

Further, preferably, the above accepting unit includes a displaying part displaying a menu with regard to acceptance of the user instruction, and the above controlling unit may modify the menu to be displayed on the displaying part of the accepting unit, according to the reproducibility.
Further, preferably, the controlling unit may restrict a reproduction object by the reproducing unit to the reproducible contents data.

Further, preferably, an accepting unit accepting an instruction to the reproduction apparatus by the user is provided, and the above controlling unit may restrict executable operation of the reproduction apparatus, based on the user instruction accepted by the accepting unit, according to the reproducibility.
Further, preferably, the above controlling unit may interrupt power supply to at least one circuit unnecessary for reproducing the contents data, among circuits included in the reproduction apparatus, or may interrupt power supply to at least one circuit unnecessary for reproducing the contents data, according to the reproducibility.

Further, preferably, a storing unit storing the contents data is provided, and with regard to contents data incapable of reproduction, the controlling unit may control so that the contents data can be recorded into the storing unit, according to the reproducibility.
Further, preferably, there may be provided at least one of a displaying unit mounted on the head of the user, for projecting a virtual image in front of an eye of the user and an audio-output unit outputting audio, and a wearable part capable of wearing at least one of the displaying unit and the audio-output unit on the head of the user.

Further, preferably, a computer program according to the present invention causes a computer to function as a controlling unit any of each aforementioned reproduction apparatus.

### EFFECTS OF THE INVENTION

According to the present invention, the condition of a reproduction apparatus is automatically set into a condition appropriate for the connection situations of a variety of devices connected to the reproduction apparatus. Therefore, in the device and the system applying the present invention, user convenience can be increased, as well as the performance and added values.

### BRIEF DESCRlPTlON OF THE DRAWINGS

Fig. 1 is a diagram illustrating an electrical configuration according to a first embodiment of the present invention.
Fig. 2(a) is an overall configuration diagram of a terminal 10 and an HMD 30, and Fig. 2(b) is a partial cross-sectional view of a storage case 65 configuring the HMD 30.
Fig. 3 is a diagram illustrating an electrical configuration according to a seventh embodiment of the present invention.
Fig. 4 is a diagram illustrating an electrical configuration of a variation of the seventh embodiment according to the present invention.
Fig. 5 is an overall configuration diagram of a reproduction apparatus 70, according to an eighth embodiment of the present invention, and a DVD player 80 connected to the reproduction apparatus 70.
Fig. 6 is an overall configuration diagram of the reproduction apparatus 70, according to the eighth embodiment of the present invention, and a television tuner 90 connected to the reproduction apparatus 70.
Fig. 7 is an overall configuration diagram of the reproduction apparatus 70, according to the eighth embodiment of the present invention, and a digital camera 100 connected to the reproduction apparatus 70.

### BEST MODE FOR CARRYING OUT THE INVENTION

### [First embodiment]

Hereinafter, an embodiment of the present invention will be described in detail referring to the drawings. First, an electrical configuration thereof is described.

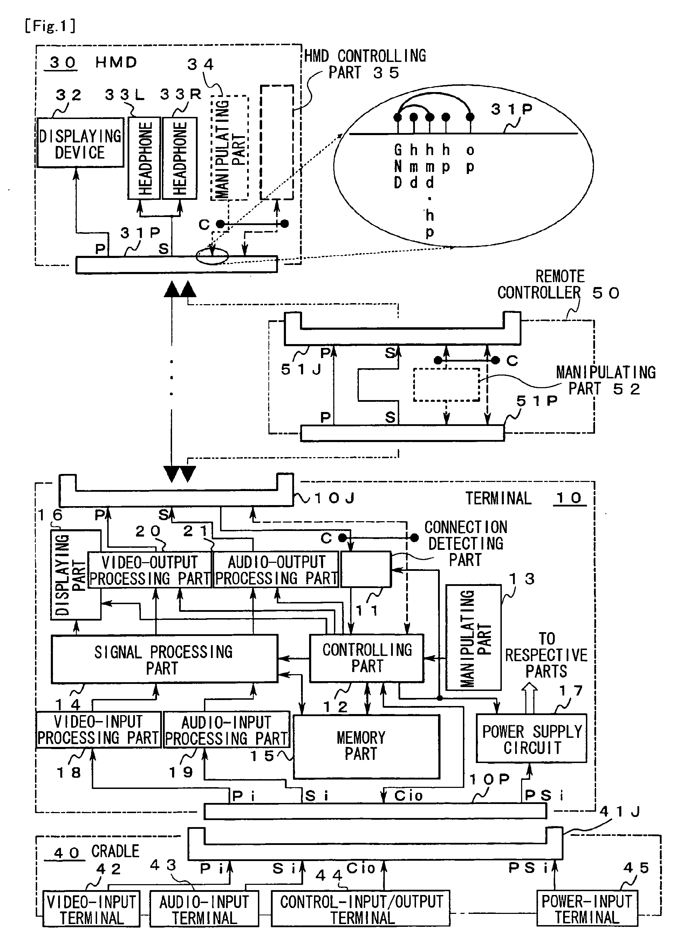

Fig. 1 is a diagram illustrating the electrical configuration according to a first embodiment of the present invention. As shown in Fig. 1, an HMD 30, a cradle 40, etc. are connected to a terminal 10, a reproduction apparatus. Among them, the terminal 10 has functions similar to those of the aforementioned media player. Although other devices may occasionally be used in place of the HMD 30, the description on the HMD 30 is mainly given here.

The terminal 10 includes a receptacle 10J and a plug 10P, the HMD 30 includes a plug 31P, and the cradle 40 includes a receptacle 41J. The terminal 10 and the HMD 30 are connected via the receptacle 10) and the plug 31 P. Also, the terminal 10 and the cradle 40 are connected via the plug 10P and the receptacle 41J.
First, the electrical configuration of the terminal 10 and the connection relationship between each part will be described.

Pins provided on the receptacle 10J of the terminal 10 include pins configuring P group, S group and C group. The pins in the P group are used to deliver an image signal to be output to the HMD 30, the pins in the S group are used to deliver an audio signal to be output to the HMD 30, and the pins in the C group are used to deliver control information output from the HMD 30. Here, the identifiers "P", "S" and "C" of these groups are the initial letters of "Picture", "Sound" and "Control", respectively.

Also, pins provided on the plug 10P of the terminal 10 include pins configuring Pi group, Si group, Cio group and PSi group. The pins in the Pi group are used to deliver an image signal contained in the contents to be recorded or reproduced, the pins in the Si group are used to deliver an audio signal contained in the similar contents, the pins in the Cio group are used to deliver control information with regard to the setting and the supervision of the operation of the terminal 10, and the pins in the PSi group are used to deliver power to be supplied to the above-mentioned power supply circuit 17. Here, the identifiers "Pi", "Si", "Cio" and "PSi" of these groups are configured of capital letters corresponding to the initial letters of "Picture", "Sound", "Control" and "Power Supply", respectively, and small letters signifying "input", "output" and "input/output" indicating the direction of the above delivery, using the terminal 10 as a basis.

Among the pins on the receptacle 10j, the pins in the C group are connected to the input of a connection detecting part 11, and the output of the above connection detecting part 11 is connected to a first input port of a controlling part 12. To a second input port of the controlling part 12, the output of a manipulating part 13 is connected, and a first output port of the above controlling part 12 is connected to a first input port of a signal processing part 14. The bus terminals of the above controlling part 12 and the signal processing part 14 are connected to the corresponding ports of a memory part 15. Here, the memory part 15 is configured of, for example, a hard disk device or an IC memory accessed under predetermined area management. A first output port of the signal processing part 14 is connected to a first input of a displaying part 16. To a second input of the displaying part 16, a second output port of the controlling part 12 is connected, and a third output of the above controlling part 12 is connected to the control terminal of the power supply circuit 17.

Further, among the pins in the plug 10P, the pins in the Pi group are connected to the input of a video-input processing part 18, and the pins in the Si group are connected to the input of an audio-input processing part 19. The outputs of the above video-input processing part 18 and the audio-input processing part 19 are connected to a second and a third input port of the signal processing part 14, respectively. A second output port of the signal processing part 14 is connected to the pins in the P group of the receptacle 10J, via a video-output processing part 20. A third output port of the signal processing part 14 is connected to the pins in the S group of the receptacle 10J. via the audio-output processing part 21. The pins in the Cio group of the plug 10P are connected to the input/output port of the controlling part 12, and the pins in the PSi group of the above plug 10P are connected to the input of the power supply circuit 17.

Next, the electrical configuration of the HMD 30 and connection relationship between each part will be described.
The HMD 30 includes a displaying device 32, headphone 33L, 33R, a manipulating part 34, an HMD controlling part 35 for controlling the HMD, etc., in addition to the plug 31 P realizing electrical connection to the terminal 10, as described earlier.
The displaying device 32 and the headphone 33L, 33R is connected to the pins corresponding to the above-mentioned P group and the S group, respectively, among the pins of the plug 31 P. The HMD controlling part 35 is connected to particular input/output port of the controlling part 12 of the terminal 10, via the corresponding pins of the plug 31 P and the receptacle 10J of the terminal 10. The HMD controlling part 35 not only controls each function of the HMD 30, but also outputs, to the controlling part 12 of the terminal 10, whether or not the HMD 30 can output audio and whether or not the HMD 30 can display video. According to the above output result, the controlling part 12 controls the terminal 10, as will be described in detail later. The output of the manipulating part 34 is connected to a portion of the pins corresponding to the aforementioned C group, among the pins of the plug 31 P.

The remaining pins in the C group (hereinafter referred to as "pins in the sub-C group") are grounded in advance according to the combination corresponding to the configuration (including type) and the characteristic of the HMD 30, as shown with enlargement in the upper right part of Fig. 1. Here, the above pins in the sub-C group are used, for example, to deliver binary information to the terminal 10, together with the grounded terminal GND, a reference for the above-mentioned grounding. By the above binary information, the terminal 10 can identify the device configuration connected to the receptacle 10J of the terminal 10 (hereinafter, the device concerned is referred to as "connection object device"). In order to distinguish from other devices, for example, one or two information sets of the following binary information are output as the above binary information.
(a) First binary information indicating whether or not the connection object device is a device hmd (hereinafter referred to as "head mount display") capable of outputting an image reproduction signal, while having no speaker or the like capable of outputting audio.
(b) Second binary information indicating whether or not the connection object device is a device hmd · hp (hereinafter referred to as "head mount display & headphone") capable of outputting both an image reproduction signal and an audio reproduction signal.
(c) Third binary information indicating whether or not the connection object device is a device hp (hereinafter referred to as "headphone") capable of outputting an audio reproduction signal, while having no displaying part or the like capable of outputting video.
(d) Fourth binary information indicating whether or not the connection object device includes a manipulating part op corresponding to the aforementioned manipulating part 34.

Incidentally, the HMD 30 is a head mount display & headphone (b), because of including both the headphone and the displaying device.
In addition, one connection object device (HMD 30 in Fig. 1) is directly connected to the terminal 10 according to the present embodiment, and however, such the connection object device (HMD 30 in Fig. 1) may be connected via a remote controller 50, as shown by a frame of double-dashed chain lines placed in the substantially center right part of Fig. 1. Also, to the terminal 10, a plurality of connection object devices may be connected in series. Further, the above plurality of connection object devices may be connected in parallel, via one or more receptacles (which are provided on the terminal 10 together with the receptacle 10J).

Further, the above-mentioned remote controller 50 includes a manipulating part 52 corresponding to the manipulating part of the connection object device (HMD 30 in Fig. 1), a plug 51 P fit to the receptacle 10J of the terminal 10, and a receptacle 51J fit for connecting to the connection object device, such as the plug 31 P of the connection object device (HMD 30 in Fig. 1). The manipulating part 52, the plug 51 P and the receptacle 51J are connected via wiring lines for realizing relaying among the above three parties. Also, a signal from the manipulating part 52 is input to the controlling part 12 via the pins in the above-mentioned C group. Further, in such the remote controller 50, a displaying device corresponding to the displaying part 16 of the terminal 10 may also be provided together.

Next, the electrical configuration of the cradle 40 and the connection relationship between each part will be described.
A receptacle 41J of the cradle 40 realizes electrical connection with the terminal 10 via the plug 10P of the terminal 10. To pins corresponding to the aforementioned Pi group, the Si group, the Cio group and the PSi group among the pins of the receptacle 41J, video-input terminal 42, audio-input terminal 43, control-input/output terminal 44 and power-input terminal 45 are connected, respectively. Via the above terminals, the cradle 40 is connectable to an information terminal (such as computer). Additionally, it is detected whether or not the cradle 40 has been connected to the terminal 10 by a non-illustrated mechanical switch provided on the plug 10P of the terminal 10. The mechanical switch is physically pushed in by the cradle 40 when the cradle 40 is connected to the terminal 10, and as a result, the switch is turned ON.

Next, the fundamental operation of the electrical component according to the present embodiment will be described. In the following, a case that the connection object device to the terminal 10 is the HMD 30 is described.
The power supply circuit 17 provided on the terminal 10 includes a non-illustrated battery, and the power supplied from the cradle 40 is stored in the battery. At this time, the power is supplied to the power supply circuit 17 successively via the power-input terminal 45 provided on the cradle 40, the receptacle 41J of the cradle 40 and the plug 10P of the terminal 10. Further, the power supply circuit 17 supplies the power thus stored in the battery to each part of the terminal 10 as driving power, and also supplies driving power to the HMD 30. Among them, the driving power to the HMD 30 is supplied via a predetermined pin of the receptacle 10J on the terminal 10, and a predetermined pin of the plug 31 P on the HMD 30.

To the video-input terminal 42 of the cradle 40, an image signal is input from the information terminal. The image signal is input to the video-input processing part 18 of the terminal 10, via the receptacle 41J of the cradle 40 and the plug 10P of the terminal 10. The video-input processing part 18 generates digital image information by performing A/D conversion and other processing on the image signal, and supplies the digital image information to the signal processing part 14.

To the audio-input terminal 43 of the cradle 40, an audio signal is input from the information terminal. The above audio signal is input to the audio-input processing part 19 of the terminal 10, via the receptacle 41J of the cradle 40 and the plug 10P of the terminal 10. The audio-input processing part 19 generates digital audio information by performing A/D conversion and other processing on the above audio signal, and supplies the digital audio information to the signal processing part 14.

The controlling part 12 of the terminal 10 performs predetermined processing according to the instruction shown below and the device connected to the terminal 10, and also specifies signal processing to the signal processing part 14, depending on necessity.
(a) Instruction given by the user via the manipulating part 13 of the terminal 10.
(b) Instruction given from the information terminal (personal computer, etc.) via the control-input/output terminal 44 of the cradle 40.
(c) Instruction delivered from the HMD 30 when the manipulating part 34 of the HMD 30 is manipulated by the user.

Additionally, the information (c) is delivered to the controlling part 12 via the plug 31 P, the receptacle 10J and the connection detecting part 11.
Based on the instruction thus obtained and the information related to the device connected to the terminal 10, the controlling part 12 controls each part, such as the signal processing part 14. Meanwhile, the signal processing part 14 receives control from the controlling part 12, and when either both or one of the above-mentioned image information and the audio information (hereinafter simply referred to as "contents data") is input via the cradle 40, stores the information into the memory part 15 as a file.

Here, as contents data types, for example, there are video contents data with audio, containing both audio information and image information (moving image information), audio contents data containing audio information only, and image contents data containing image information (still image information) only, and hereinafter, there will be described processing in the case the contents data stored in the memory part 15 is video contents data with audio.

In case the device connected to the terminal 10 is a head mount display & headphone, when the signal processing part 14 reads out desired contents data (video contents data with audio in this case) already stored in the memory part 15, the image information contained in the contents data concerned is delivered to the video-output processing part 20, and the audio information contained in the contents data concerned is delivered to the audio-output processing part 21. Here, the memory area which is an object of writing and reading to/from the memory part 15 is determined under area management performed by the signal processing part 14 or the controlling part 12.

The video-output processing part 20 generates a reproduction signal (analog image signal) by performing D/A conversion and other processing onto the aforementioned image information, and further, delivers such the reproduction signal to the HMD 30. Also, the audio-output processing part 21 generates a reproduction signal (analog audio signal) by performing D/A conversion and other processing onto the aforementioned audio information, and further, delivers such the reproduction signal to the HMD 30. The delivery of the above image and audio reproduction signals is performed via the receptacle 10J of the terminal 10 and the plug 31 P of the HMD 30.

The HMD 30 outputs the reproduction signal output from the terminal 10 so as to be sensible by the user via the displaying device 32 and the headphone 33L, 33R. At this time, the audio reproduction signal delivered from the terminal 10 is fed to the headphone 33L, 33R, while the image reproduction signal delivered from the terminal 10 is fed to the displaying device 32.
Further, the HMD controlling part 35 of the HMD 30 controls a non-illustrated volume for controlling the output of the headphone 33L, 33R. The volume control is performed according to the manipulation contents on the manipulating part 34 of the HMD 30. Therefore, by appropriately manipulating the manipulating part 34 of the HMD 30, the user can change the audio volume emitted from the headphone 33L, 33R.

Also, to either both or one of the displaying part 16 of the terminal 10 and the displaying device 32 of the HMD 30, the signal processing part 14 of the terminal 10 can output, for example, the following information as an image.
(a) Content information of the contents stored in the memory part 15.
(b) Message to be informed to the user.

Here, the message (b) is to be informed to the user according to the manipulation of the reproduction apparatus and the device(s) connected to the reproduction apparatus, such as manipulation contents of the manipulating part 13 of the terminal 10, manipulation contents of the manipulating part 34 of the HMD 30, and a request for moving the displaying device 32 of the HMD 30. The above message data are also stored in the memory part 15.
Next, a mechanical configuration according to the present embodiment will be described. Here, a case that the connection object device to the terminal 10 is also the HMD 30 is described.

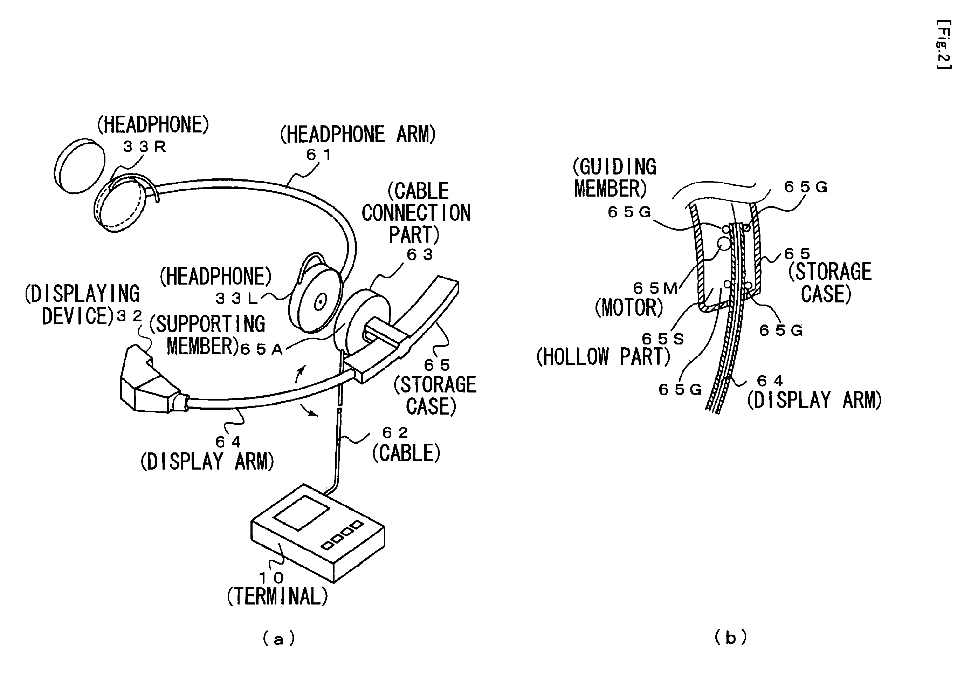

Fig. 2(a) is an overall configuration diagram of the terminal 10 and the HMD 30, and Fig. 2(b) is a partial cross-sectional view of a storage case 65 configuring the HMD 30.
As shown in Fig. 2(a), in the HMD 30, the headphone 33L, 33R are attached to the both ends of a headphone arm 61. The headphone arm 61 is configured of a member molded in an arc shape. The displaying device 32 is attached to one end of a display arm 64. The display arm 64 is molded with a predetermined curvature. The other end of the display arm 64 is retained by the storage case 65. As shown in Fig. 2(b), the storage case 65 includes a hollow part 65S capable of storing the display arm 64, and a guiding member 65G configured of a plurality of bearings disposed in the hollow part 65S. Further, as shown in Fig. 2(a), on a side wall of the storage case 65, there is provided a supporting member 65A which can be engaged with the headphone 33L, and also serves as a cable connection part 63. Further, an articulating mechanism which can rotate the display arm 64 in the arrow direction is provided between the supporting member 65A and the storage case 65. Additionally, the above cable connection part 63 is connected to the terminal 10 via the aforementioned plug 31 P (not shown in Fig. 2), a cable 62, and the receptacle 10J (not shown in Fig. 2). With the arrangement, the displaying device 32 of the HMD 30 is connected to the terminal 10 (the output of the video-output processing part 20 in the terminal 10). The above connection is intended by the combination of wiring lines, reaching inside of the cable connection part 63 via the inside of the display arm 64 and the hollow part 65S of the storage case 65, with core wires assigned to the pins in the aforementioned P group among the core wires of the cable 62, at the inside of the cable connection part 63.

Further, the HMD controlling part 35 (not shown in Fig. 2) of the HMD 30 is disposed inside the cable connection part 63, for example. Further, the HMD controlling part 35 is connected to a motor 65M supplying power necessary for the movement of the display arm 64 along the guiding member 65G, and a sensor (not shown) for detecting the position of the display arm 64, via the aforementioned wiring lines. Also, on the articulating mechanism part disposed between the supporting member 65A and the storage case 65, there is provided a non-illustrated sensor, being connected to the HMD controlling part 35.

Thus, by way of the sensor, the HMD controlling part 35 detects whether the display arm 64 is in a condition stored in the storage case 65 (invisible condition), or the displaying device 32 of the HMD 30 is in a condition positioned in front of a user's eye (visible condition), and then controls the motor 65M and outputs an audio message, etc. to the audio-output processing part so as to request to move the displaying device 32 of the HMD 30 to the front of user's eye, according to the result from the sensor and an instruction from the controlling part 12.

The timing of such the extension and storage of the display arm 64 by way of the HMD controlling part 35 is determined by the manipulation contents on the manipulating part 34 of the HMD 30. Therefore, by the user appropriately manipulating the manipulating part 34, the extension and storage of the display arm 64 can be made at desired timing.
Next, referring to Fig. 1, features and operation of the present embodiment will be described.

The features of the present embodiment lie in the following processing performed by the controlling part 12 and the signal processing part 14 in the terminal 10. The processing is performed in cooperation with the connection detecting part 11.
In the terminal 10, the connection detecting part 11 and the controlling part 12 identify which of the following the configuration of the connection object device corresponds to.
(A) Head mount display having no manipulating part.
(B) Head mount display & headphone, having no manipulating part.
(C) Headphone having no manipulating part.
(D) No connection of a connection object device.
(A') Head mount display having the manipulating part.
(B') Head mount display & headphone, having the manipulating part.
(C') Headphone having the manipulating part.

Incidentally, when the connection object device is the HMD 30, it is identified that the device corresponds to the head mount display & headphone (B') having the manipulating part.
The above identification is performed based on the pin condition (or the pin combination) belonging to the aforementioned sub-C group of the connection object device. Additionally, any connection object device has a plug matching the receptacle 10J, and is connected based on common pin assignment. Further, in each of a variety of connection object devices, grounding of the pins are performed by a wiring pattern, etc. provided on the connection object devices.

Also, with regard to whether the connection object device includes the manipulating part, the discrimination is performed based on the fourth binary information described earlier. Further, with regard to the type of connection object device, the identification is performed based on the logic value of the first or the third binary information described earlier (the binary information is delivered from the connection object device to the controlling part 12 via the receptacle 10J and the connection detecting part 11).
According to the present embodiment, the controlling part 12 performs the processing described below, irrespective of the presence or absence of the manipulating part in the connection object device. On identifying in the connection detecting part 1 that the connection object device is in connection, the controlling part 12 performs each of the following processing, depending on the connection object device identified by the connection detecting part 11.
[1] In case the connection object device is the head mount display [(A), (A')], the controlling part 12 sets, as a reproduction object, only the contents data configured of image information only, or the contents data containing image information (for example, any of a moving image file with audio, a still image file with audio, and a file of video only), among the contents data stored in the memory part 15. Then, the contents data to be displayed on the contents list, for use in selecting the contents data to be reproduced in the terminal 10, are restricted so that the user can select only each of the above-mentioned contents data, and further, as a contents list to be displayed on the displaying device 32 of the HMD 30 and the displaying part 16 of the terminal 10, the contents list having the restricted contents data is displayed.
[2] In case the connection object device is the headphone [(C), (C')], the controlling part 12 restricts a reproduction object to only the contents data configured of audio information only among the contents data stored in the memory part 15. Then, the contents data to be displayed on the aforementioned contents list are restricted so that the user can select only each of the above-mentioned contents data, and further, as a contents list to be displayed on the displaying device 32 of the HMD 30 and the displaying part 16 of the terminal 10, the contents list having the restricted contents data is displayed.
[3] In case the connection object device is the head mount display & headphone [(B), (B')], the controlling part 12 sets, as a reproduction object, the entire contents data containing at least one of image information and audio information, among the contents data stored in the memory part 15. Then, the contents data to be displayed on the aforementioned contents list are restricted so that the user can select the above-mentioned entire contents data (for example, the whole of a moving image file with audio, a still image file with audio, a file of video only, and a file of audio only), and further, as a contents list to be displayed on the displaying device 32 of the HMD 30 and the displaying part 16 of the terminal 10, the contents list having the restricted contents data is displayed.

Namely, the contents data to be reproduced by the terminal 10 are automatically selected and restricted only to the contents data capable of outputting via the connection object device. Therefore, according to the present embodiment, it is possible to avoid useless delivery of the contents data not reproducible via the connection object device to the connection object device. At this time, operability is not deteriorated. Further, according to the present embodiment, in addition to high-speed readout from the memory part 15, area management processing performed at the time of the above readout can be simplified, and user convenience is improved as well.

Additionally, according to the present embodiment, an example of restricting the contents data to be reproduced by selecting the contents data displayed on the aforementioned contents list has be shown, and however, by making it possible to display the entire contents data in the contents list, it may be possible to restrict the contents data selectable by the user from among the displayed contents data, to the contents data being selected according to the connection object device. In this case, for example, it is also possible to disable the selection of contents data incapable of reproduction by the connection object device, even when the contents data incapable of reproduction by the connection object device are displayed in the contents list.

Additionally, in case that the connection object device is not connected [(D)], selection of the contents data to be reproduced may be inhibited in the terminal 10. For example, it is possible to inhibit the display of the aforementioned contents list, or display the contents list in a protected manner, to disable the selection.

### [Second embodiment]

Next, a second embodiment will be described. In the second embodiment, only the points of difference from the first embodiment will be described. The second embodiment provides an electrical configuration and connection relationship between each part which are similar to those of the first embodiment. In the following, the description is given by use of symbols like those used in the first embodiment.

According to the present embodiment, the controlling part 12 and the signal processing part 14 control the operational condition of the terminal 10 in the following manner, according to the connection object device identified similarly to the first embodiment.
[1] In case the connection object device is the head mount display [(A), (A')], the controlling part 12 enables processing (hereinafter referred to as "image reproduction processing") to be performed by the signal processing part 14 to deliver image information, capable of being reproduced via the head mount display, to the video-output processing part 20, and also enables operation of the above video-output processing part 20. Also, the controlling part 12 regulates both processing (hereinafter referred to as "audio reproduction processing") to be performed by the signal processing part 14 to deliver to the audio-output processing part 21 audio information incapable of being reproduced via the head mount display, and operation of the above audio-output processing part 21. Here, as a typical example of the regulation, the controlling part 12 halts the execution of the processing part concerned. Further, among the manipulations performed by the user via the manipulating part 13, the controlling part 12 supervises the presence or absence of a manipulation related to a function not provided in the head mount display, the connection object device. Then, the controlling part 12 determines whether the processing to be executed according to the manipulation of the manipulating part of the terminal 10 and the manipulating part of the head mount display is appropriate processing, based on the connection condition of the connection object device and the operation content executable in the connection object device.
[2] In case the connection object device is the headphone [(C), (C')], the controlling part 12 enables the aforementioned "audio reproduction processing" and the operation performed by the audio-output processing part 21. Also, the controlling part 12 regulates both the aforementioned "image reproduction processing" to be performed by the signal processing part 14 and the operation of the video-output processing part 20. Further, among the manipulations performed by the user via the manipulating part 13, the controlling part 12 supervises the presence or absence of manipulation related to a function not provided in the headphone, the connection object device, and controls in the similar manner to [1].
[3] In case the connection object device is the head mount display & headphone [(B), (B')], the controlling part 12 enables the operation of both the audio-output processing part 21 and the video-output processing part 20, in addition to the aforementioned "audio reproduction processing" and the "image reproduction processing". Further, among the manipulations performed by the user via the manipulating part 13, the controlling part 12 supervises the presence or absence of manipulation related to a function not provided in the head mount display & headphone, the connection object device, and controls in the similar manner to [1].
[4] In case the connection object device has not a function of reproducing the contents data, or in case no device is connected, the controlling part 12 halts the operation of the signal processing part 14 and each output processing part. Namely, in the terminal 10, a signal processing sequence and hardware working with regard to the contents data reproduction incapable of being reproduced by the connection object device are regulated automatically. Thus, according to the present embodiment, the processing in the controlling part is reduced without deteriorating operability, and performance improvement and power consumption reduction are intended.

Additionally, in any cases, when the manipulation related to the function not provided in the connection object device is performed, an error message is output using an image and/or audio, and thus, it is possible to make the user become conscious whether or not the event is caused by an incorrect manipulation.

### [Third embodiment]

Next, a third embodiment will be described. In the third embodiment, only the points of difference from the first embodiment will be described. The third embodiment provides an electrical configuration and connection relationship between each part which are similar to those of the first embodiment. In the following, the description is given by use of symbols like those used in the first embodiment.

The features of the present embodiment lie in the operation performed by the connection detecting part 11, and in the processing performed by the controlling part 12 and the signal processing part 14, according to the connection object device identified in a similar manner to the first embodiment.
The connection detecting part 11 further discriminates whether or not the connection object device includes a manipulating part op corresponding to the manipulating part 34, according to fourth binary information "indicating whether or not the connection object device includes the manipulating part op corresponding to the aforementioned manipulating part 34 (the manipulating part of the connection object device)", among each set of binary information described in the first embodiment.

Further, the controlling part 12 performs the following processing according to the identified connection object device.
[1] By the aforementioned discrimination performed in the connection detecting part 11, in case the manipulating part is not included in the connection object device [(A), (B), (C)], the controlling part 12 cooperates with the signal processing part 14 no matter which the connection object device is the head mount display, the headphone and the head mount display & headphone, so as to control to place only the manipulating part 13 of the terminal 10 into an acceptable condition. Further, to the contrary, in case the manipulating part is included in the connection object device [(A'), (B'), (C')], user manipulation is accepted based on a manipulation from the manipulating part concerned, and when the manipulation on the manipulating part 13 and the manipulation on the manipulating part of the connection object device are performed within a short time, the controlling part 12 controls to accept only the manipulation performed earlier.
[2] In case the connection object device is the head mount display [(A), (A')], the controlling part 12 notifies the user of a message, etc. indicating the manipulation contents, via the displaying part 16 of the terminal 10. Further, the controlling part 12 generates a contents list of the contents data selected according to the connection object device, so as to simultaneously display via the displaying device 32 of the head mount display, the connection object device, and the displaying part 16 of the terminal 10, or the controlling part 12 forcibly halts the display on the displaying part 16 of the terminal 10, so as to save power consumption, and displays the contents list only on the displaying device 32 of the head mount display. The user selects desired contents data from the contents list using the manipulating part, and the reproduction of the contents data is executed.
[3] In case the connection object device is the headphone [(C), (C')], the controlling part 12 halts output to the video-output processing part 20. Further, the controlling part 12 guides the contents data selected according to the connection object device, via an audio-output unit (headphone, etc.) provided on the headphone, the connection object device, and the displaying part 16 of the terminal 10. According to the above guidance, the user selects desired contents data from the selected contents data using the manipulating part, so as to reproduce the contents data.
[4] In case the connection object device is the head mount display & headphone [(B), (B')], the controlling part 12 outputs a message, etc., indicating the manipulation contents, via the display way of the head mount display & headphone, the connection object device. Further, the controlling part 12 displays the contents data selected according to the connection object device on the display way of the head mount display & headphone, the connection object device, and makes audio guidance on the audio-output unit (headphone, etc.) simultaneously. The processing thereinafter is similar to any of the above-mentioned [1] - [3].

Namely, the display contents of manipulation menu made via either the terminal 10 or the manipulating part of the connection object device are restricted to the items which can be realized via the connection object device. Thus, according to the present embodiment, because the manipulation menu flexibly adapted to the configuration of the connection object device, user manipulation can be simplified, or the reduction in the processing amount of the signal processing part can be intended.
Additionally, according to the present embodiment, the method for restricting the above-mentioned manipulation may be realized by any combination between a method for inhibiting in the terminal 10 the acceptance of an instruction given by the user via the manipulating part 13 or the manipulating part in the connection object device (invalidation: for example, processing for inhibiting to accept manipulation related to the head mount display which is not connected as the connection object device) and the omission of information which is not necessary to inform the user via the displaying part 16 of the terminal 10 and the display way of the connection object device.

Further, in the first to the third embodiments, when selecting contents data according to the connection object device, identification of whether audio contents data, image contents data or video contents data with audio is made based on the file name and the extension type of the contents data. Then, according to the above identification result, it may be possible to control to enable the user to select the contents data according to the connection object device.

### [Fourth embodiment]

Next, a fourth embodiment will be described. In the fourth embodiment, only the points of difference from the first embodiment will be described. The fourth embodiment provides an electrical configuration and connection relationship between each part which are similar to those of the first embodiment. In the following, the description is given by use of symbols like those used in the first embodiment.
In the present embodiment, the controlling part 12 performs the following processing in cooperation with the power supply circuit 17, according to the connection object device identified similarly to the first embodiment.
[1] In case the connection object device is the head mount display [(A), (A')], the controlling part 12 supplies driving power to the video-output processing part 20 and a circuit functioning in cooperation with the head mount display, the connection object device, etc., and halts the driving power supply to the audio-output processing part 21.
[2] In case the connection object device is the headphone [(C), (C')], the controlling part 12 halts the driving power supply to the video-output processing part 20, and supplies the driving power to the audio-output processing part 21.
[3] In case the connection object device is the head mount display & headphone [(B), (B')], the controlling part 12 supplies driving power to a circuit which functions in cooperation with the head mount display & headphone, the connection object device, etc., such as the video-output processing part 20 and the audio-output processing part 21 which respectively deliver image information and audio information capable of reproduction via the head mount display & headphone, the connection object device.
[4] In case any device capable of outputting audio information or displaying image information is not connected as the connection object device [(D)], the controlling part 12 halts the supply of driving power to both the video-output processing part 20 and the audio-output processing part 21.

Namely, the terminal 10 automatically halts the driving power supply to the hardware in the terminal 10 which is useless for outputting a signal to the connected device, so as to limit the function which becomes apparent through the manipulation. Therefore, according to the present embodiment, the reduction of power consumption is intended without deteriorating operability.
Additionally, according to the present embodiment, the supply of driving power to the video-input processing part 18 and the audio-input processing part 19 are not regulated. However, as will be described later in a fifth embodiment, for example, when the controlling part 12 identifies a time period that the terminal 10 is connected to the cradle 40, the driving power to the video-input processing part 18 and the audio-input processing part 19 may be supplied only in the time period.

Also, according to the aforementioned first to the fourth embodiments, the types of contents data to be reproduced are limited according to the configuration of the connection object device. Alternatively, the manipulation menu display items and a circuit to be activated (or, to which the driving power is to be supplied) with regard to the reproduction of the above contents data are restricted. Further, in the first to the fourth embodiments, the manipulation sequence of the connection object device may be varied to simplify the manipulation procedure. However, when the connection detecting part 11 identifies the presence or absence of connection, the conditions (including the settings performed to the connection object device prior to the connection to the terminal 10) and the characteristic (performance) with regard to the connection object device, it is possible to automatically fix the objects of the above restriction in a mode appropriate to the presence or absence of connection, the conditions, and the characteristic (performance) of the connection object device, as exemplified in the following.
(1) Reproduction objects are restricted to reproducible contents data, according to the presence or absence of connection of the connection object device and the conditions of the connection object device.
(2) Selectable manipulation menu items are restricted to items related to reproducible contents data, according to the presence or absence of connection of the connection object device, and the conditions and the characteristics (performance) of the connection object device.
(3) Objects of the regulation of working and the regulation of the driving power supply are restricted to the circuits unnecessary for the reproduction of reproducible contents data, according to the presence or absence of connection of the connection object device, and the conditions of the connection object device.
(4) Settings of the video-output processing part 20, the audio-output processing part 21 and other circuits in the terminal 10 are made to become optimal either to the display and acoustic characteristics (performance) at the time of reproduction by the connection object device, or to the characteristic appropriate for the contents data reproducible with the above characteristics (performance). Additionally, to such the characteristics (performance) of the connection object device, both the format of reproducible audio information (for example, monaural, 2-channel stereo and other multi-channel stereos) and the contents of reproducible image information (for example, scanning system, resolution, fit colorimetric system, and so on) correspond.

Further, according to the above-mentioned first to the fourth embodiments, as will be exemplified in the following embodiments, file formats to be stored as contents data in the memory part 15 of the terminal 10 may be limited on the basis of not only the configuration of the connection object device, but also the presence or absence of connection to the terminal 10 and the conditions of the connection object device, and it may be possible to restrict manipulation menu display items with regard to the storage of the above files and a circuit to be activated (or to which driving power is to be supplied). For example, when the connection object device is a device having no display unit, or when the device is in the condition incapable of display even though the connection object device is a device having a display unit, it becomes possible to store into the memory part 15 video contents data with audio, containing audio information and image information (moving image information), audio contents data containing audio information only, and image information (still image information). Alternatively, when the connection object device has no audio output unit, or when the device is in the condition incapable of audio output even though the connection object device is a device having an audio output unit, it becomes possible to store audio information into the memory part 15. Further, as another mode than the above, it may be possible to restrict a selection menu such as a contents list, according to the information capable of being stored in the memory part 15. Additionally, it may be possible to regulate the working of a circuit unnecessary for storing information, and to regulate the driving power supply thereto.

Also, when storing information into the memory part 15, it may be possible to correct data so as to obtain a preferable output characteristic, based on the output characteristic of the device (the connection object device) having high possibility of connection.

### [Fifth embodiment]

Next, a fifth embodiment will be described. In the fifth embodiment, only the points of difference from the first embodiment will be described. The fifth embodiment provides an electrical configuration and connection relationship between each part which are similar to those of the first embodiment. In the following, the description is given by use of symbols like those used in the first embodiment.

The features of the present embodiment lie in the following processing performed by the controlling part 12.
The controlling part 12 identifies a time point at which the terminal 10 is connected to the cradle 40 with predetermined frequency. Additionally, for such the identification, for example, pins in the aforementioned Cio group of the plug 10P on the terminal 10 are assigned, and the identification is made from the change of a logic value in binary information indicating whether or not the cradle 40 has been connected to the terminal 10.

Also, the controlling part 12 performs discrimination of the presence or absence of connection of the connection object device, or the discrimination whether or not the connection object device is the HMD 30 (also, a case of either the aforementioned head mount display or the head mount display & headphone is similar).
Also, the controlling part 12 makes the audio-input processing part 19 and the video-input processing part 18 into operational conditions, irrespective of the connection object device. Further, the controlling part 12 instructs the signal processing part 14 to shift to a "video record mode" or an "audio record mode" for converting the image information and the audio information, being input from the cradle 40 via the audio-input processing part 19 and the video-input processing part 18 to contents data (file) of a predetermined format to store the contents data (file) into the memory part 15. Here, the "video record mode" is a mode in which the video-output processing part 20 is halted, and image information input from the cradle 40 via the video-input processing part 18 is stored into the memory part 15. Also, the "audio record mode" is a mode in which the audio-output processing part 21 is halted, and audio information input from the cradle 40 via the audio-input processing part 19 is stored into the memory part 16.

Further, when the connection object device is the HMD 30 (or, a case of either the head mount display or the head mount display & headphone is similar), the controlling part 12 discriminates whether the display arm 64 is stored in the hollow part 65S in the storage case 65, and performs any of the following processing when the display arm 64 is not stored in the hollow part 65S of the storage case 65.
[1] The controlling part 12 instructs the HMD controlling part 35 to drive the display arm 64. Also, by controlling the power supply circuit 17, the controlling part 12 supplies to the HMD 30 power necessary for automatically storing the display arm 64 to the inside of the storage case 65 along the guiding member 65G. Further, the controlling part 12 halts the supply of the above power, on identifying via the aforementioned sensor that the display arm 64 has been stored (retracted) inside the storage case 65.
[2] The controlling part 12 notifies the user via the signal processing part 14 that "the displaying device 32 is to be stored (retracted) inside the storage case 65" as a message of image information and audio information, via the entire or a portion of the displaying part 16 of the terminal 10, the displaying device 32 of the HMD 30 and the headphone 33L, 33R. Further, the controlling part 12 halts the message output, on identifying, via the aforementioned sensor and the HMD controlling part 35, that the displaying device 32 of the HMD 30 has been stored (retracted) inside the storage case 65.

Namely, in the condition of being connected to the HMD 30 (a case of either the aforementioned head mount display or the head mount display & headphone is similar), when the terminal 10 is connected to the cradle 40, the terminal 10 is automatically put into the condition being capable of video recording or audio recording, and further, the display arm 64 is automatically stored (retracted) inside the storage case 65, or the manipulation related to such the storage (retracted) is automatically prompted to the user.

By the control described in above [1] and [2], even in case the display by the displaying device 32 of HMD 30 is unnecessary, a condition such that the display arm 64 is not stored (retracted) in the storage case 65 is avoided from being continued for a long time, and therefore, the possibility of the display arm 64 and the displaying device 32 of the HMD 30 being broken, or the occurrence of a failure caused by the contact of a substance such as a human body becomes remarkably decreased.
Additionally, according to the present embodiment, for example, the controlling part 12 may control to automatically extend the display arm 64 from the storage case 65, when the release of connection between the terminal 10 and the cradle 40 is detected in a condition that the HMD 30 (also, a case of either the aforementioned head mount display or the head mount display & headphone is similar) is connected to the terminal 10.

In addition, according to the present embodiment, a shift to the "video record mode" or "audio record mode" is automatically performed when the terminal 10 is connected to the cradle 40 in the condition that the terminal 10 is connected to the HMD 30 (also, a case of the aforementioned head mount display or the head mount display & headphone is similar). However, such the shift to the "video record mode" may be performed when any further manipulation is made by the user.

Also, a terminal capable of inputting a video signal to the video-input processing part 18 of the terminal 10 is additionally provided on the terminal 10, so that the video-input processing part 18 can detect the presence or absence of the video signal input. Then, it may be possible to be configured to shift to the "video record mode" when the video-input processing part 18 detects the video signal input. At this time, by shifting to the "video record mode" irrespective of the connection object device, it is possible to prevent incorrect recording of the input video signal caused by an artificial manipulation error.

Further, it is also effective to halt transmission of the video signal and the audio signal to the HMD 30 by halting the video-output processing part 20 and the operation of the audio-output processing part 21. In the "video record mode", by the control of the controlling part 12, it is also possible not to output to the HMD 30 the reproduction signal of the image information. Also, by the control of the controlling part 12, it is possible to halt power supply to the video-output processing part 20. Also, by the control of the controlling part 12, it is possible to simply halt signal transmission from the video-output processing part 20, or to halt output to the video-output processing part 20 from the signal processing part 14. In the "audio record mode", by the control of the controlling part 12, it is also possible not to output to the HMD 30 the reproduction signal of the audio information. Also, by the control of the controlling part 12, it is possible to halt power supply to the audio-output processing part 21. Also, by the control of the controlling part 12, it is possible to simply halt signal transmission from the audio-output processing part 21, or to halt output to the audio-output processing part 21 from the signal processing part 14. Further, in the "video record mode" and the "audio record mode", it is possible to control not to execute a user instruction accepted via the manipulating part 34 of the HMD 30.

Also, a terminal capable of inputting an audio signal to the audio-input processing part 19 of the terminal 10 is additionally provided on the terminal 10, so that the audio-input processing part 19 can detect the presence or absence of the audio signal input. Then, it may also be possible to be configured shift to the "audio record mode" when the audio-input processing part 19 detects the audio signal input.
Further, it is possible to enable simultaneous record mode of audio recording and video recording, and also, instead of shifting to the record mode after detecting the presence or absence of the signal input, it is also possible to shift to the record mode such as the "video record mode" and the "audio record mode" by detecting the presence or absence of a terminal connection.

Further, according to the present embodiment, at the time point of the shift to the above-mentioned "video record mode" or the "audio record mode", or after the above shift, at the time point of becoming unnecessary to be used for the output of the above-mentioned message, etc., it is also possible to halt the working of the video-output processing part 20, or to halt the supply of driving power to the above video processing part 20. This can attain reduction of power consumption.

Further, according to the present embodiment, during the period in which the terminal 10 is connected to the cradle 40, in the terminal 10, the controlling part 12 may withhold the acceptance of manipulation in regard to the HMD 30, the connection object device. This can prevent the occurrence of an accident such that the display arm 64 is unexpectedly extended by an incorrect manipulation of the user.
Further, according to the present embodiment, by the controlling part 12, the audio-input processing part 19 and the video-input processing part 18 working in the "video record mode" and the "audio record mode" are automatically set operable when the connection between the terminal 10 and the cradle 40 is detected. However, it may also be possible to supply driving power to the above audio-input processing part 19, the video-input processing part 18 and other circuits only for use in video recording and audio recording, directly by the cradle 40 connected to the terminal 10, without the intervention of the controlling part 12.

Also, it is possible to provide unit as shown in the following, when the video signal and the audio signal from outside the terminal 10 can be input to the terminal 10 only via the cradle 40.
A connection detection unit detecting the connection of the cradle 40 is provided on the plug 10P, and when the connection to the cradle 40 is detected by the connection detection unit, the power supply to the video-input processing part 18 and the audio-input processing part 19 is automatically started, as described above. Then, at the time point when the connection is no more detected, it is possible to automatically halt the power supply. As such, by automatically performing power supply to each of the input processing parts 18 and 19, power consumption in unnecessary circuits can be reduced.

### [Sixth embodiment]

Next, a sixth embodiment will be described. In the sixth embodiment, only the points of difference from the first embodiment will be described. The sixth embodiment provides an electrical configuration and connection relationship between each part which are similar to the first embodiment. In the following, the description is given by use of symbols like those used in the first embodiment.
The features of the present embodiment lie in the following processing performed by the controlling part 12.

The controlling part 12 identifies that the display arm 64 is stored (retracted) inside the storage case 65 in the above-mentioned fifth embodiment. Then, after the suspension of either motive power supply necessary for automatically storing the display arm 64 inside the storage case 65 along the guiding member 65G, or message output indicating that the above display arm 64 is to be stored (retracted) inside the storage case 65, the operation of the video-output processing part 20 is halted, or the driving power supply to the video-output processing part 20 is regulated.

As such, by the detection that the display arm 64 has been stored into the storage case 65, it can be determined that observation by use of the displaying device 32 is not performed. Based on the above determination, it is possible to prevent that an unnecessary signal is supplied from the video-output processing part 20 to the HMD 30, and prevent that unnecessary power is consumed in the video-output processing part 20.
Additionally, as other methods than halting the power supply to the unnecessary parts, depending on the retracted condition of the display arm 64, it is possible to halt output signal transmission in the video-output processing part 20 and the audio-output processing part 21 in the terminal 10, and to halt output signal transmission from the signal processing part 14. Power consumption can also be reduced by controlling each processing part to halt the unnecessary signal output.

### [Supplements to the first through the sixth embodiments]

In the above description, there has been given a case that, when connected to the cradle 40, the terminal 10 is automatically shifted into any of the "video record mode", the "audio record mode" and the "video & audio record mode" appropriate for the configuration and the type of the connection object device. However, instead of the automatic shift, it is also possible to control each part so as to restrict the modes selectable by the user to the "video record mode", the "audio record mode" or the "video & audio record mode".

With such the configuration, it is possible to greatly simplify user manipulation intended to perform video recording or audio recording inside the terminal 10 via the cradle 40.
Also, the processing to shift the terminal 10 to any of the aforementioned "video record mode", "audio record mode" and "video & audio record mode" may be initiated in any of the following modes.
(1) Initiated when the connection object device is not connected to the terminal 10, and an instruction to shift the terminal 10 to any of the "video record mode", "audio record mode" and the "video & audio record mode" is given via each type of the manipulating part.
(2) Initiated before the display arm 64 of the HMD 30 is stored (retracted) inside the storage case 65.
(3) Initiated without the display arm 64 of the HMD 30 being stored (retracted) inside the storage case 65.
(4) Initiated in a condition that none of the head mount display, the headphone and the head mount display & headphone is connected to the terminal 10 as an effective device (the connection object device).
(5) Initiated when the connection between the terminal 10 and the connection object device is released, irrespective of whether or not the terminal 10 is connected to the cradle 40.
(6) Initiated at the time point when the connection object device is connected to the terminal 10.

Additionally, in the "audio record mode" and the "video & audio record mode", the file formats to be stored in the memory part 15 as contents data are desirably an MP3 format and an MPEG2-AAC (Advanced Audio Coding) format which are indicated by predetermined extensions, and however, the formats may be set separately based on the configurations of the terminal 10 and a variety of types of the connection object device, or may be selected based on the configurations of the terminal 10 and the variety of types of the connection object device.

### [Seventh embodiment]

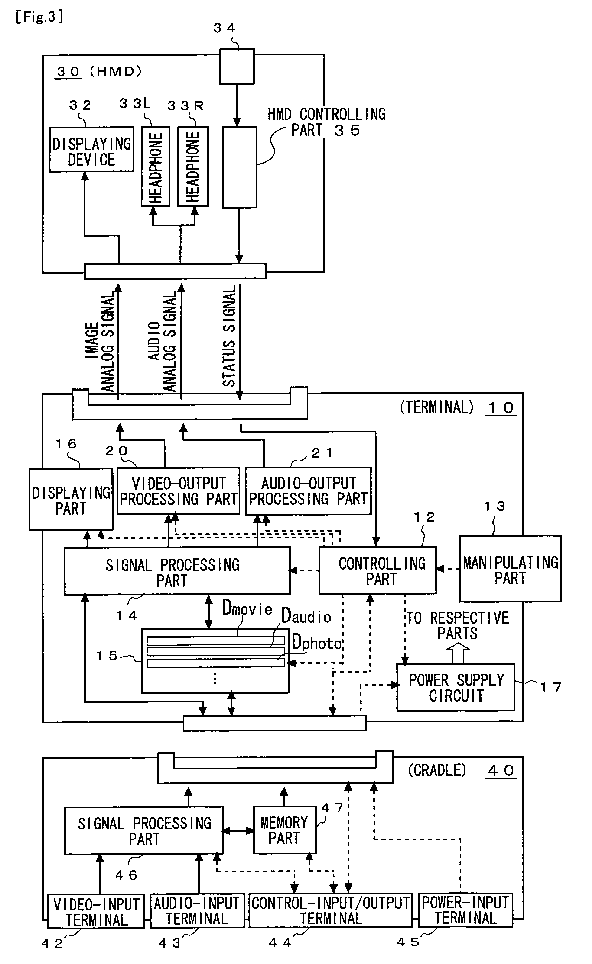

Next, a seventh embodiment will be described in detail according to the drawings. Here, only the main points of difference from the first embodiment will be described. The main points of difference lie in the configuration of the cradle 40 and the operation of the controlling part 12, and the description hereinafter uses Fig. 3 in which portions having no relation with the description are omitted. In Fig. 3, the dotted lines signify the routes of a variety of control signals.

In the present embodiment, the cradle 40 includes a signal processing part 46 and a memory part 47, in addition to each similar part in the first embodiment. In the memory part 47, it is possible to store contents data such as image information and audio information (for example, any of a moving image file with audio, a still image file with audio, a file of video only, and a file of audio only).
Further, in the memory part 15 of the terminal 10, there are stored video contents data Dₘₒᵥᵢₑ with audio, containing audio information and image information (moving image information), audio contents data D_{audio} containing audio information only, and image contents data Dₚₕₒₜₒ containing image information (still image information) only.

Similar to the fifth embodiment, by the pins in the Cio group of the plug 10P on the terminal 10, the controlling part 12 in the terminal 10 detects whether or not the cradle 40 is connected to the terminal 10, based on a logic value of binary information indicating whether or not the cradle 40 has been connected to the terminal 10. Then, on detecting that the cradle 10 is connected to the terminal 10, the controlling part 12 in the terminal 10 determines whether or not contents data reproducible by the terminal 10 exists in the memory part 47 of the cradle 40. The above determination is made by referring to the file format of each contents data, for example.

On determining that the contents data reproducible by the terminal 10 exists in the memory part 47 of the cradle 40, the controlling part 12 supplies power to the cradle 40, via a power-input terminal 45. Then, the controlling part 12 transfers the contents data reproducible by the terminal 10, among the contents data stored in the memory part 47 of the cradle 40, from the cradle 40 to the terminal 10, and stores into the memory part 15 of the terminal 10. Here, the controlling part 12 may confirm a free capacity of the memory part 15 in the terminal 10 before the execution of the transfer, and execute the transfer only when the free capacity of the memory part 1 5 in the terminal 10 is greater than the contents data capacity to be transferred.

Namely, when the cradle 40 is connected to the terminal 10, and further the contents data reproducible by the terminal 10 exists in the memory part 47 of the cradle 40, the transfer of the contents data concerned is automatically performed from the cradle 40 to the terminal 10. Therefore, according to the present embodiment, processing according to the connection object device can be performed automatically.

Additionally, on detecting that the cradle 40 is connected to the terminal 10, it is possible that the controlling part 12 of the terminal 10 supplies power to the cradle 40 via the power-input terminal 45, and further, among the contents data stored in the memory part 15 of the terminal 10, transfers contents data not existent in the memory part 47 of the cradle 40 from the terminal 10 to the cradle 40, so as to store into the memory part 47 of the cradle 40. At this time, the controlling part 12 may confirm a free capacity of the memory part 47 in the cradle 40 before the execution of the transfer, and execute the transfer only when the free capacity of the memory part 47 in the cradle 40 is greater than the contents data capacity to be transferred.

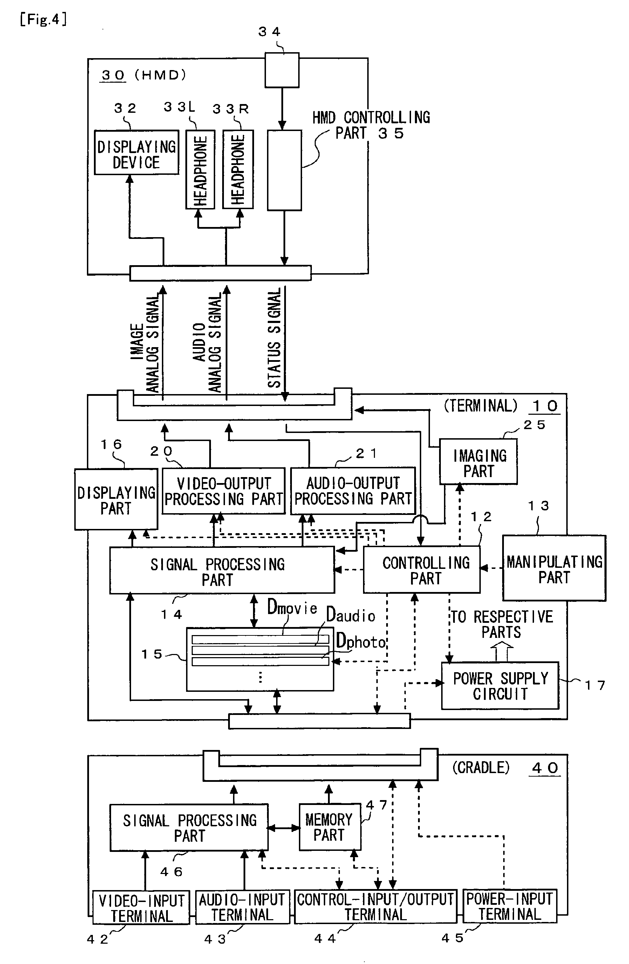

Namely, when the cradle 40 is connected to the terminal 10, it is possible to transfer the contents data from the terminal 10 to the cradle 40, not only to transfer the contents data from the cradle 40 to the terminal 10.
In addition, similarly, the present invention may be applied to a terminal having an imaging function. For example, as shown in Fig. 4, the terminal 10 includes an imaging part 25 having a non-illustrated imaging lens and an imaging device. According to the instruction of the controlling part 12, the imaging part 25 images an object image and generates image information, so as to output to the signal processing part 14.

The controlling part 12 outputs the image information generated by the imaging part 25 to the connection object device, according to the connection object device (in the present embodiment, the HMD 30 and the cradle 40) being connected to the terminal 10. The controlling part 12 may output image information of an image (so-called through image) generated, for example, during confirming the composition, and use the connection object device as viewfinder. Also, the controlling part 12 may output the image information generated by imaging to the connection object device without modifying, or may output to the connection object device the image information once stored in the memory part 15 after generated by imaging.

### [Eighth embodiment]

Hereinafter, an eighth embodiment of the present invention will be described in detail according to the drawings. In the present embodiment, as an example of the reproduction apparatus according to the present invention, the description is given by taking as examples DVD player, television tuner, and digital camera, as connection object devices connected to the reproduction apparatus. The DVD player, the television tuner, and the digital camera are examples of the connection object devices supplying contents data to the reproduction apparatus.

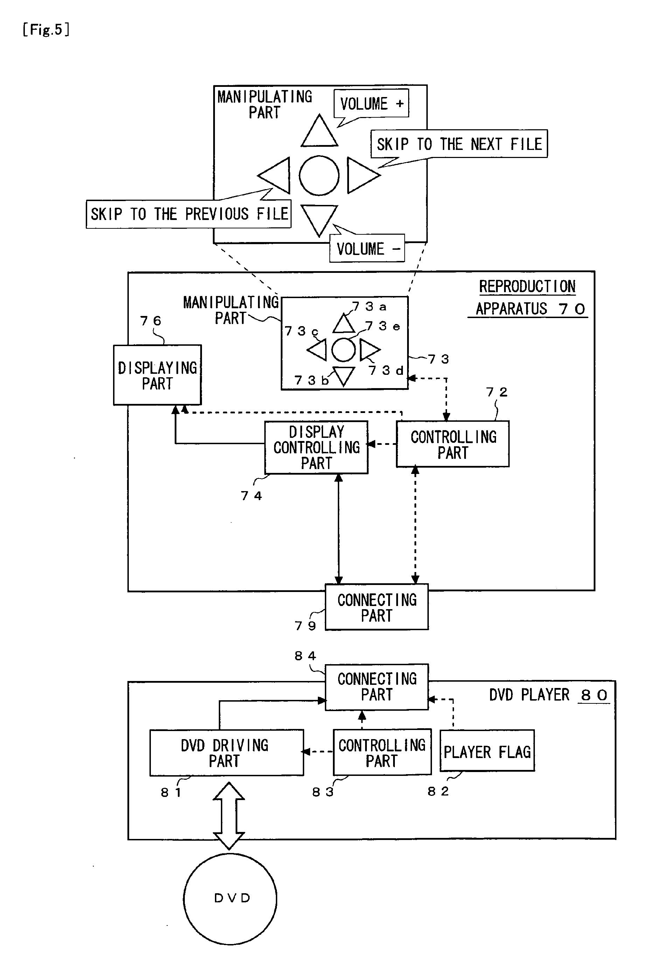

Fig. 5 is an overall configuration of a reproduction apparatus 70 according to an eighth embodiment of the present invention, and a DVD player 80 connected to the reproduction apparatus 70.
In the present embodiment, the reproduction apparatus 70 includes a controlling part 72, a manipulating part 73, a display controlling part 74, a displaying part 76 and a connecting part 79. The controlling part 72 controls each part in the reproduction apparatus 70, and also detects whether or not the DVD player 80, which will be described later, is connected to the reproduction apparatus 70. The manipulating part 73 includes buttons (73a-73d) provided on the upper, lower, left and right sides, and also includes a center button 73e for use as a determination button, etc. The display controlling part 74 controls display resolution, image display size, etc. when displaying a variety of contents data to be reproduced via the displaying part 76. The displaying part 76 is a display, or the like, aimed at listening/viewing contents containing images, which is different from a compact display unit to be used for menu setting, etc. The connecting part 79 includes terminals, etc. for connecting to the connection object device (device for supplying contents data to the reproduction apparatus 70), such as the DVD player 80 described later. Additionally, the connecting part 79 may be used in common to the plug 10P provided for connecting the cradle 40 to the terminal 10 in the aforementioned embodiments.

Also, the DVD player 80 includes a DVD driving part 81, a player flag 82, a controlling part 83 and a connecting part 84. The DVD driving part 81 can mount and demount a DVD disk, and supplies the contents data stored in the DVD to the reproduction apparatus 70 via the connecting part 84. The player flag 82 is a flag indicating the connection condition of the DVD player 80 to the reproduction apparatus 70. By supervising the above player flag, the aforementioned controlling part 72 of the reproduction apparatus 70 detects whether or not the DVD player 80 is connected to the reproduction apparatus 70. The controlling part 83 controls each part in the DVD player 80. Also, the connecting part 84 includes a terminal, etc. for connecting the aforementioned reproduction apparatus 70, etc.

The controlling part 72 of the reproduction apparatus 70 detects whether or not the DVD player 80 is connected to the reproduction apparatus 70, based on the player flag 82 of the DVD player 80. Then, on detecting that the DVD player 80 is connected to the reproduction apparatus 70, the controlling part 72 restricts operation in the reproduction apparatus 70 to fit to the DVD player 80.
Specifically, the controlling part 72 optimizes the manipulation system of the manipulating part 73 to the operation of the DVD player 80. For example, user instructions corresponding to "sound volume +", "sound volume -" are assigned to the upper and the lower buttons (73a and 73b), respectively, and user instructions corresponding to "skip to the previous file", "skip to the next file" are assigned to the left and the right buttons (73c and 73d), respectively. As such, by modifying the manipulation system of the manipulating part 73 in the reproduction apparatus 70 to fit to the DVD player 80, it is possible to improve operability. Also, it is possible to prevent user confusion during manipulation.

Further, the controlling part 72 controls the display controlling part 74 to optimize the display resolution and the display size of an image to fit to the DVD player 80. As such, by optimizing the display of the reproduction apparatus 70 to fit to the DVD player 80, it is possible to improve user convenience.

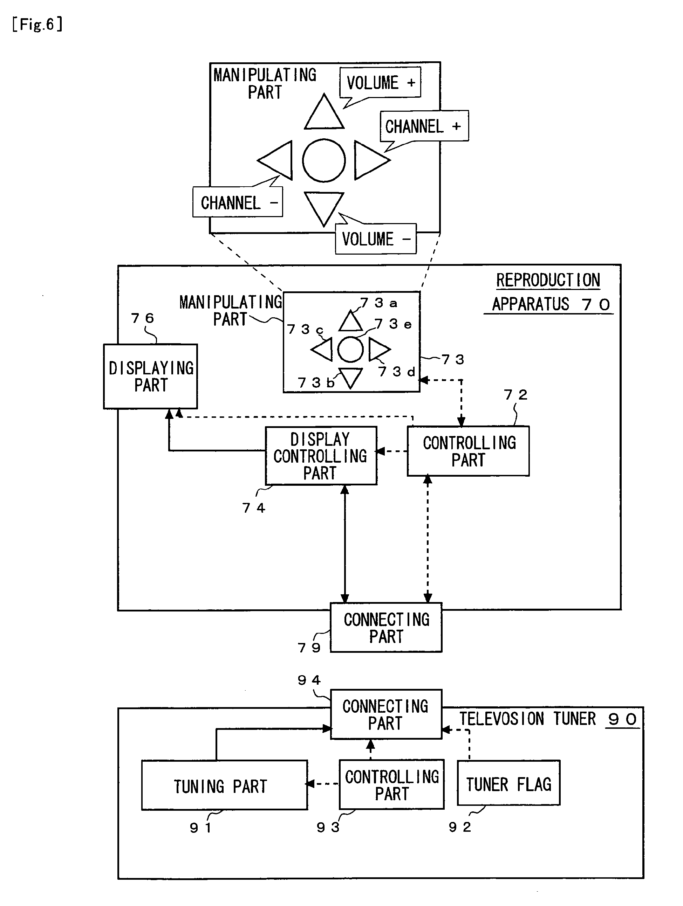

Fig. 6 is an overall configuration diagram of the reproduction apparatus 70 according to the present embodiment and a television tuner 90 connected to the reproduction apparatus 70.

In the example shown in Fig. 6, the controlling part 72 of the reproduction apparatus 70 controls each part in the reproduction apparatus 70, and also detects whether or not the television tuner 90 described later is connected to the reproduction apparatus 70. The connecting part 79 includes a terminal, etc. for connecting the television tuner 90 (a device for supplying contents data to the reproduction apparatus 70) which will be described later.
Also, the television tuner 90 includes a tuning part 91, a tuner flag 92, a controlling part 93 and a connecting part 94. The tuning part 91 includes a receiving function for receiving television signals, and a transmitting function for transmitting the received signals to the reproduction apparatus 70 via the connecting part 94. The tuner flag 92 is a flag indicating the connection condition of the television tuner 90 to the reproduction apparatus 70. The aforementioned controlling part 72 of the reproduction apparatus 70 detects whether or not the television tuner 90 is connected to the reproduction apparatus 70 by supervising the above tuner flag 92. The controlling part 93 controls each part in the television tuner 90. Also, the connecting part 94 includes a terminal, etc. for connecting the aforementioned reproduction apparatus 70, etc.

The controlling part 72 in the reproduction apparatus 70 detects whether or not the television tuner 90 is connected to the reproduction apparatus 70, based on the tuner flag 92 of the television tuner 90. Then, on detecting that the television tuner 90 is connected to the reproduction apparatus 70, the controlling part 72 restricts operation in the reproduction apparatus 70 to fit to the television tuner 90.
Specifically, the controlling part 72 optimizes the manipulation system of the manipulating part 73 to the operation of the television tuner 90. For example, user instructions corresponding to "sound volume +", "sound volume -" are assigned to the upper and the lower buttons (73a and 73b), respectively, and user instructions corresponding to "channel -", "channel +" are assigned to the left and the right buttons (73c and 73d), respectively. As such, by modifying the manipulation system of the manipulating part 73 in the reproduction apparatus 70 to fit to the television tuner 90, it is possible to improve operability. Also, it is possible to prevent user confusion during manipulation.

Further, the controlling part 72 controls the display controlling part 74 to optimize the display resolution and the display size of an image to fit to the television tuner 90. As such, by optimizing the display of the reproduction apparatus 70 to fit to the television tuner 90, it is possible to improve user convenience.

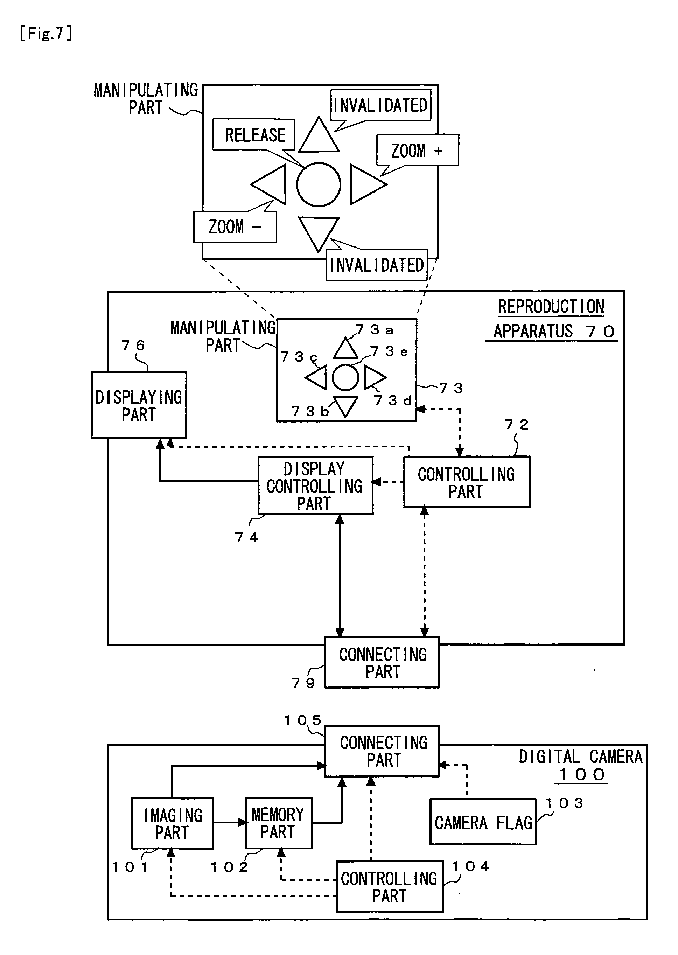

Fig. 7 is an overall configuration of the reproduction apparatus 70 according to the present embodiment and a digital camera 100 connected to the reproduction apparatus 70.

In the example shown in Fig. 7, the controlling part 72 of the reproduction apparatus 70 controls each part in the reproduction apparatus 70, and also detects whether or not the digital camera 100 described later is connected to the reproduction apparatus 70. The connecting part 79 includes a terminal, etc. for connecting the digital camera 100 (a device for supplying contents data to the reproduction apparatus 70) which will be described later.
Also, the digital camera 100 includes an imaging part 101, a memory part 102, a camera flag 103, a controlling part 104 and a connecting part 105. The imaging part 101 includes a non-illustrated imaging device, etc., and generates image information by imaging an object image. The memory part 102 stores image information generated by the imaging part 101. The camera flag 103 is a flag indicating the connection condition of the digital camera 100 to the reproduction apparatus 70. The aforementioned controlling part 72 of the reproduction apparatus 70 detects whether or not the digital camera 100 is connected to the reproduction apparatus 70 by supervising the above camera flag 103. The controlling part 104 controls each part in the digital camera 100. Also, the connecting part 105 includes a terminal, etc. for connecting the aforementioned reproduction apparatus 70, etc.

The controlling part 72 in the reproduction apparatus 70 detects whether or not the digital camera 100 is connected to the reproduction apparatus 70, based on the camera flag 103 of the digital camera 100. Then, on detecting that the digital camera 100 is connected to the reproduction apparatus 70, the controlling part 72 restricts operation in the reproduction apparatus 70 to fit to the digital camera 100.
Specifically, the controlling part 72 optimizes the manipulation system of the manipulating part 73 to the operation of the digital camera 100. For example, the upper and the lower buttons (73a and 73b) are invalidated. Further, user instructions corresponding to "zoom -", "zoom +" are assigned to the left and the right buttons (73c and 73d), respectively, and a user instruction corresponding to "release" is assigned to the center button (73e). As such, by modifying the manipulation system of the manipulating part 73 in the reproduction apparatus 70 to fit to the digital camera 100, it is possible to improve operability. Also, it is possible to prevent user confusion during manipulation.

Further, the controlling part 72 controls the display controlling part 74 to optimize the display resolution and the display size of an image to fit to the digital camera 100. As such, by optimizing the display of the reproduction apparatus 70 to fit to the digital camera 100, it is possible to improve user convenience.
Further, the image information generated by the digital camera 100 may be transferred from the digital camera 100 to the reproduction apparatus 70, via the connecting part 79. The image information to be transferred may be image information of an image (so-called through image) which is generated during confirmation of composition. In this case, the reproduction apparatus 70 may be used as viewfinder. Also, the image information to be transferred may be image information once stored in the memory part 102 after generated by the imaging part 101, or image information output to the connecting part 105 intact, after generated by the imaging part 101.

The image information transferred from the.digital camera 100 may be displayed on the displaying part 76 via the display controlling part 74 of the reproduction apparatus 70. Also, it may be possible to configure the reproduction apparatus 70 to have a memory part, so as to store the transferred image information into the memory part. In this case, by confirming free capacity of the memory part in the reproduction apparatus 70 before the transfer, it is also possible to perform the transfer only when the free capacity of the memory part in the reproduction apparatus 70 is greater than the capacity of the image information to be transferred. Also, it is possible to transfer image information, etc. from the memory part in the reproduction apparatus 70 to the memory part 102 in the digital camera 100.

Further, when the digital camera 100 includes an audio information acquisition function such as a microphone, it is possible to make the audio information transferable, in the same way as the image information described in the present embodiment.
Additionally, in the present embodiment, when modifying the manipulation system and optimizing the display, contents of the processing are preferably notified to the user at the time of initial connection. For example, following the modification of the manipulation system, a manipulation guide, such as a chart indicating what sort of manipulation is assigned to each button on the manipulating part 73, is displayed on the displaying part 76, and thus, it becomes possible to prevent user confusion during manipulation.

Also, according to the present embodiment, the description has been made by exemplifying the DVD player, the television tuner and the digital camera as a connection object device for supplying contents data to the reproduction apparatus 70. However, the present invention may be applicable to other devices, if the devices can supply contents data to the reproduction apparatus 70. For example, the present invention may be realized in a similar manner using a mobile phone as a connection object device to supply contents data to the reproduction apparatus 70. When the mobile phone is connected to the reproduction apparatus 70 as the connection object device, the manipulation system of the manipulating part 73 of the reproduction apparatus 70 is optimized for the mobile phone, and speech volume, etc. may be made adjustable using the manipulating part 73 of the reproduction apparatus 70. Also, a Web image, etc. obtained by the mobile phone through communication may be supplied to the displaying part 76 of the reproduction apparatus 70. Further, between the reproduction apparatus 70 and the mobile phone, image information and audio information may be transferred mutually. Also, at the time point when the mobile phone is connected to the reproduction apparatus 70, a list of executable operation may be displayed on the displaying part 76 of the reproduction apparatus 70.

Further, according to the present embodiment, the description has been made taking an example of the reproduction apparatus having the display unit, and however, it is also applicable to a reproduction apparatus having an audio output unit in a similar manner. Also, similar to the aforementioned first to the seventh embodiments, it is similarly applicable to a case when a display unit (device) such as HMD is connected to the reproduction apparatus (the terminal 10). Oppositely, the invention having been described in the first to the seventh embodiments may be applicable to a reproduction apparatus having a display unit and an audio output unit, as in the present embodiment. Also, it is also the case in the reproduction apparatus having an integral structure of the terminal 10 and the HMD 30 described in the aforementioned first to seventh embodiments.

Further, in each aforementioned embodiment, the detection of the connection of the connection object device to the cradle 40 and the terminal 10 as well as the detection of the configuration or the condition of the above connection object device is made on the basis of the logic value of the binary information in each aforementioned embodiment. However, it is possible to realize such the detection based on any of the following. Also, it is possible to realize under any functional distribution among the connection object device, the cradle 40 and the terminal 10.
(1) The potential and the impedance of the wiring connected to the connection object device via any pin of the receptacle 10J on the terminal 10.
(2) The information delivered from the connection object device via the wiring described in (1).
(3) The procedure of cooperation with the connection object device performed via the wiring described in (1).
(4) The presence or absence or the level of the image signal and the audio signal, being input from the cradle 40 to the video-input processing part 18 and the audio-input processing part 19.
(5) The potential and the impedance of the wiring connected to the cradle 40 via any pin of the plug 10P on the terminal 10.
(6) The information delivered from the cradle 40 via the wiring described in (5).
(7) The procedure of cooperation with the connection object device performed via the wiring described in (5).

Also, in each aforementioned embodiment, one connection object device is directly connected to the terminal 10. However, such connection object device may be connected via a remote controller 50 shown by the frame of double-dashed chain lines in the substantially center right portion of Fig. 1. Also, a plurality of connection object devices being connected in series with the terminal 10 may be possible. Further, the above plurality of connection object devices may be connected in parallel, via one or more receptacles provided together with the receptacle 10J on the terminal 10, and identification is made preferentially in the order of, for example, the head mount display & headphone > the head mount display > the headphone, and there is no limitation of use between the head mount display and the headphone, like being mutually exclusive.

Additionally, the above-mentioned remote controller 50 includes a manipulating part 52 corresponding to the aforementioned manipulating part 34 in the HMD 30, a plug 51 P fit to the terminal 10 (the receptacle 10J), and a receptacle 51J suitable for the connection to the HMD 30 (the plug 31 P) and other connection object devices, with the configuration of being connected via wiring which realizes relay via the above-mentioned manipulating part 52, the plug 51 P and the receptacle 51J. Also, such the remote controller 50 may be provided with a displaying device corresponding to the aforementioned displaying device 30 of the HMD 30. Further, each above-mentioned embodiment may be combined arbitrarily, or may be applied individually.

Also, according to each above-mentioned embodiment, the configuration of the connection object device, the condition of the connection object device, etc. are identified by the controlling part 12, as the combination of the pins grounded in advance in each connection object device, based on the binary information delivered via the receptacle 10J and the connection detecting part 11. However, such the configuration and the condition of the connection object device may be given by any of the contact points of a mechanical switch additionally provided internally for each connection object device, and the contact points of a mechanical switch provided on the terminal 10, which is connected or disconnected either electrically or mechanically by the connection object device.

Further, in each aforementioned embodiment, any configurations of the connection object devices are maintained to have a constant time point of being connected to the terminal 10. For example, when the displaying part provided on the head mount display & headphone and the head mount display connected to the terminal 10 as connection object device is detachable, it may be possible to identify that such the connection object device is either changed to the headphone or virtually removed, by way of the information indicative of the presence or absence of the displaying part concerned being delivered to the controlling part 12.

Also, the present invention is not limited to the aforementioned embodiments, and a variety of embodiments are possible within the scope of the present invention, and any alterations may be possible on the entire configuration devices or a portion thereof. Also, it is possible to execute with the combination of each aforementioned embodiment.
Also, as one example of the embodiment of the present invention, the aforementioned function performed by the controlling part 12 of the terminal 10 may be performed on a personal computer connected to the control-input/output terminal of the cradle 40. In that case, it is sufficient if software, which is capable of executing in the personal computer similar control to that having been performed on the controlling part 12 of the terminal 10, is installed in the personal computer concerned.

Additionally, when connecting to the personal computer, the connection may be performed using a serial bus such as USB or FireWire (both are registered trademarks). In that case, music data, video data, etc. can be exchanged using an identical terminal, and needless to say, the control of the terminal 10 can also be exchanged using the identical terminal.

## Claims

1. A reproduction apparatus reproducing contents data containing at least one of audio and image, comprising:
a reproducing unit reproducing said contents data;
a connecting unit connecting an external device to said reproduction apparatus; and
a controlling unit having control within said reproduction apparatus, according to presence and absence of connection of said device to said connecting unit, and a type of said device.

2. The reproduction apparatus according to claim 1, further comprising:
an accepting unit accepting an instruction to said reproduction apparatus by said user, wherein
said controlling unit restricts said user instruction acceptable by said accepting unit, according to said device type connected to said connecting unit.

3. The reproduction apparatus according to claim 2, wherein:
said accepting unit includes a displaying part displaying a menu with regard to acceptance of said user instruction; and
said controlling unit modifies the menu to be displayed on said displaying part of said accepting unit, according to said device type connected to said connecting unit.

4. The reproduction apparatus according to claim 1, wherein
said controlling unit restricts a reproduction object by said reproducing unit to contents data capable of being output by said device connected to said connecting unit.

5. The reproduction apparatus according to any one of claim 1 to claim 4, further comprising:
an accepting unit accepting an instruction to said reproduction apparatus by said user, wherein
said controlling unit restricts executable operation of said reproduction apparatus based on said user instruction accepted by said accepting unit, according to said device type connected to said connecting unit.

6. The reproduction apparatus according to claim 5, wherein:
said device connected to said connecting unit is a device having a displaying unit displaying an image, while not having an audio-output unit outputting audio; and
said controlling unit has control within said reproduction apparatus so that, among said user instructions accepted by said accepting unit, only said user instruction with regard to said contents data containing an image can be executed.

7. The reproduction apparatus according to claim 5, wherein
said device connected to said connecting unit is a device not having a displaying unit displaying an image, while having an audio-output unit outputting audio; and
said controlling unit has control within said reproduction apparatus so that, among said user instructions accepted by said accepting unit, only said user instruction with regard to said contents data containing audio can be executed.

8. The reproduction apparatus according to claim 5, further comprising:
at least one of a displaying unit displaying an image and an audio-output unit outputting audio, wherein
said controlling unit restricts operation inside said reproduction apparatus including said displaying unit and said audio-output unit, according to said device connected to said connecting unit.

9. The reproduction apparatus according to claim 1 or claim 5, wherein
said controlling unit interrupts power supply to at least one circuit unnecessary for outputting said contents data to said device, among circuits included in said reproduction apparatus, according to said contents data to be output to said device via said connecting unit.

10. The reproduction apparatus according to claim 1 or claim 5, wherein
when a device having one of a displaying unit displaying an image and an audio-output unit outputting audio is not connected to said connecting unit, said controlling unit interrupts power supply to a circuit outputting arbitrary contents data to said device, among circuits included in said reproduction apparatus.

11. The reproduction apparatus according to any one of claim 1, claim 3, claim 4 and claim 5, further comprising:
a storing unit storing said contents data, wherein
for a signal incapable of being output to said user from said device, said controlling unit controls so that an input signal similar to said signal can be recorded into said storing unit, according to said device type connected to said connecting unit.

12. The reproduction apparatus according to claim 1, further comprising:
a storing unit storing said contents data, wherein
when said device having a displaying unit displaying an image is not connected to said connecting unit, said controlling unit controls so that an input signal to said reproduction apparatus can be recorded into said storing unit.

13. The reproduction apparatus according to claim 1, further comprising:
a storing unit storing said contents data, wherein
when said device having an audio-output unit outputting audio is not connected to said connecting unit, said controlling unit controls so that an input signal to said reproduction apparatus can be recorded into said storing unit.

14. The reproduction apparatus according to claim 1 or claim 5, further comprising:
a storing unit storing said contents data, wherein:
said device connected to said connecting unit is a device supplying arbitrary contents data to said reproduction apparatus; and
said controlling unit controls so that said contents data supplied from said device can be recorded into said storing unit.

15. The reproduction apparatus according to claim 14, wherein:
in addition to said device, said connecting unit connects a second device having a displaying unit displaying an image or an audio-output unit outputting audio; and
while controlling so that said contents data can be recorded into said storing unit, said controlling unit controls said reproducing unit so as not to output, to said second device, reproduction signals of contents data of an identical type to said contents data to be recordable into said storing unit, via said connecting unit.

16. The reproduction apparatus according to claim 14, wherein:
in addition to said device, said connecting unit connects a second device having a displaying unit displaying an image or an audio-output unit outputting audio; and
while controlling so that said contents data can be recorded into said storing unit, said controlling unit interrupts power supply to a circuit outputting, to said second device, contents data of an identical type to said contents data to be recordable into said storing unit, among circuits included in said reproduction apparatus.

17. The reproduction apparatus according to claim 14, wherein:
in addition to said device, said connecting unit connects a second device having a displaying unit displaying an image or an audio-output unit outputting audio; and
while controlling so that said contents data can be recorded into said storing unit, said controlling unit controls so that said user instruction accepted via said second device be not executed.

18. The reproduction apparatus according to claim 14, wherein
said controlling unit compares said contents data stored in said storing unit with said contents data retained by said device, and based on a comparison result, controls so that said contents data supplied from said device can be recorded into said storing unit.

19. The reproduction apparatus according to claim 18, wherein
among said contents data not stored in said storing unit, said controlling unit controls so that said contents data reproducible by said reproducing unit can be recorded into said storing unit.

20. A reproduction apparatus reproducing contents data containing at least one of audio and image, comprising:
a reproducing unit reproducing said contents data; and
a controlling unit having control within said reproduction apparatus, according to reproducibility of each type of said contents data.

21. The reproduction apparatus according to claim 20, further comprising:
an accepting unit accepting an instruction to said reproduction apparatus by said user, wherein
said controlling unit restricts said user instruction acceptable by said accepting unit, according to said reproducibility.

22. The reproduction apparatus according to claim 21, wherein:
said accepting unit includes a displaying part displaying a menu with regard to acceptance of said user instruction; and
said controlling unit modifies the menu to be displayed on said displaying part of said accepting unit, according to said reproducibility.

23. The reproduction apparatus according to claim 20, wherein
said controlling unit restricts a reproduction object by said reproducing unit to said reproducible contents data.

24. The reproduction apparatus according to any one of claim 20 to claim 23, further comprising:
an accepting unit accepting an instruction to said reproduction apparatus by said user, wherein
said controlling unit restricts executable operation of said reproduction apparatus based on said user instruction accepted by said accepting unit, according to said reproducibility.

25. The reproduction apparatus according to claim 20 or claim 24, wherein
said controlling unit interrupts power supply to at least one circuit unnecessary for reproducing said contents data, among circuits included in one of said reproduction apparatus, and interrupts power supply to at least one circuit unnecessary for reproducing said contents data, according to said reproducibility.

26. The reproduction apparatus according to any one of claim 20, claim 22, claim 23 and claim 24, further comprising:
a storing unit storing said contents data, wherein
for said contents data incapable of reproduction, said controlling unit controls so that the contents data can be recorded into said storing unit, according to said reproducibility.

27. The reproduction apparatus according to any one of claim 1 to claim 26, further comprising:
at least one of a displaying unit mounted on the head of said user, projecting a virtual image in front of an eye of said user and an audio-output unit outputting audio; and
a wearable part capable of wearing at least one of said displaying unit and said audio-output unit on the head of said user.

28. A computer program causing a computer to function as a controlling unit of the reproduction apparatus according to any one of claim 1 to claim 27.
